# EUROPEAN PATENT APPLICATION

(11) **EP 2 717 411 A1**
(43) Date of publication of application: **09.04.2014**
(21) Application number: 12792010.6
(22) Date of filing: 17.05.2012
(51) Int. Cl.: H02J 3/38, H01M 10/42, H01M 10/44, H02J 7/35

(54) **POWER SUPPLY SYSTEM**

(30) Priority: 31.05.2011 JP 2011122467
(71) Applicant: Panasonic Corporation, Kadoma-shi, Osaka 571-8501 (JP)
(72) Inventor: TAMURA, Hideki, Osaka 540-6207 (JP); INAKAGATA, Satoru, Osaka 540-6207 (JP)
(74) Representative: Appelt, Christian W.
(86) International application number: PCT/JP2012/062617
(87) International publication number: WO 2012/165154

(57) **Abstract**

A power conditioner (12) includes a grid-connected output (12e) for supplying AC power during a grid-connected operation, and an autonomous receptacle (12f) for supplying AC power during an autonomous operation. A charge-discharge unit (14) includes an autonomous receptacle (14e) for supplying AC power to appliances (K2) during the autonomous operation. A malfunction detector (14h) opens a parallel-off switch (14c) to shut off power supply from the autonomous receptacle (14e) if detecting a malfunction in an output electric circuit of the autonomous receptacle (14e).

## Description

### Technical Field

The invention relates to a power supply system.

### Background Art

Conventionally, there is known a power supply system configured to feed power generated by a dispersed power source such as a photovoltaic system or the like into a commercial power supply and also to store the power in a battery, thereby supplying appliances and equipment with the power from the commercial power supply, the dispersed power source and the battery (for example, Japanese Patent Application Publication Number 2011-15501).

In the conventional power supply system, when the electricity supply from the commercial power supply is stopped (namely during power failure), the appliances and the like can be supplied with power by performing an autonomous operation to use the power generated by the dispersed power source and the power stored in the battery.

### Summary of Invention

The present invention has been achieved in view of the above circumstances, and an object thereof is to provide a power supply system capable of suppressing an overload of a grid-connected system (e.g., a grid-connected photovoltaic system) caused by electricity supply from a dispersed power source or a battery during an autonomous operation of a power conditioner.

A power supply system of the present invention comprises a power conditioner (12) and a charge-discharge unit (14). The power conditioner (12) comprises a first output part (12e) and a second output part (12f). The first output part (12e) is configured to supply a main electric circuit (Wa1, Wa2) connected with a commercial power supply (PS) with AC power obtained from a dispersed power source (13) during a grid-connected operation when the dispersed power source (13) is connected to the commercial power supply (PS). The second output part (12f) is configured to output power obtained from the dispersed power source (13) during an autonomous operation when the dispersed power source (13) is disconnected from the commercial power supply (PS). The charge-discharge unit (14) is configured: to charge a battery unit (15) by power from the commercial power supply (PS) and the second output part (12f); and also to convert power stored in the battery unit (15) into AC power to supply the AC power to at least one appliance (K2) through a discharge output part (14e). In addition, the power supply system further comprises a malfunction detector (14h) that is configured to detect a malfunction in an electric circuit from the discharge output part (14e) to the appliance (K2). The charge-discharge unit (14) is configured to stop supplying said AC power from the discharge output part (14e) if the malfunction detector (14h) detects the malfunction.

In an embodiment, the charge-discharge unit is configured to supply the appliance (K2) with power smaller than rated power of the appliance (K2) through the discharge output part (14e) if the power conditioner (12) switches the grid-connected operation to the autonomous operation. The malfunction detector (14h) is configured to detect said malfunction if an output voltage of the discharge output part (14e) is less than a threshold. The charge-discharge unit (14) is configured: to stop supplying said AC power from the discharge output part (14e) if the malfunction detector (14h) detects the malfunction; and also to increase the power supplied through the discharge output part (14e) if the malfunction detector (14h) does not detect the malfunction.

In an embodiment, the power supply system comprises a malfunction alarm (17) configured to notify occurrence of the malfunction if the malfunction detector (14h) detects the malfunction.

As stated above, the present invention has an advantage in that it is possible to suppress an overload of a grid-connected system (e.g., a grid-connected photovoltaic system) caused by electricity supply from a dispersed power source or a battery during an autonomous operation of a power conditioner.

### Brief Description of Drawings

Preferred embodiments of the invention will now be described in further details. Other features and advantages of the present invention will become better understood with regard to the following detailed description and accompanying drawings where:
FIG. 1 is a block diagram showing a configuration of a power supply system in an embodiment;
FIG. 2 is a block diagram showing a configuration of a power conditioner in the embodiment; and
FIG. 3 is a block diagram showing a configuration of a charge-discharge unit in the embodiment.

### Description of Embodiments

An embodiment of the present application is now explained with reference to the drawings.

### (Embodiment)

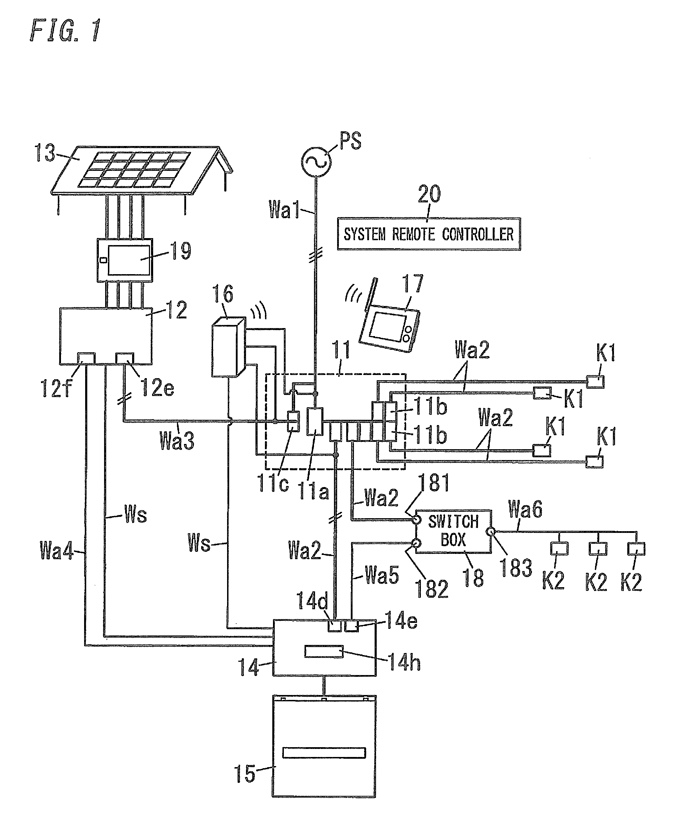

A power supply system in the present embodiment has a configuration shown in FIG. 1, and can be applied to residential systems supplied with power from an electric power company. A main configuration of the power supply system includes a distribution board (for grid connection) 11, a power conditioner 12, a solar panel(s) 13, a charge-discharge unit 14, a battery unit 15, a power measuring unit 16, an information display (monitor) terminal (hereinafter called a "monitor terminal") 17, a switch box 18, a junction box 19 and a system remote controller 20.

The distribution board 11 is connected with a main electric line (100/200 volt single-phase three-wire) Wa1 led in a residential system such as each dwelling unit of an apartment building, a detached housing, a factory, an office or the like, and supplied with commercial power through the main electric line Wa1 from a commercial power supply PS of an electric power company. The distribution board 11 houses a main circuit breaker 11a, branch circuit breakers 11b and a photovoltaic circuit breaker 11c. The main electric line Wa1 is connected to the branch circuit breakers 11b through the main circuit breaker 11a, and further connected to branch electric lines Wa2 though the branch circuit breakers 11b. The respective branch electric lines Wa2 are connected with appliances K1 such as lighting equipment, air conditioners, household electrical appliances, and the like, and AC power is supplied to the appliances K1. The main electric line Wa1 and the branch electric lines Wa2 correspond to the main electric circuit of the present invention.

The present system includes a photovoltaic system formed of the power conditioner 12 and the solar panel 13. DC power generated by the solar panel 13 which sunlight strikes is supplied to the power conditioner 12 through a junction box 19 to be converted into AC power through the power conditioner 12.

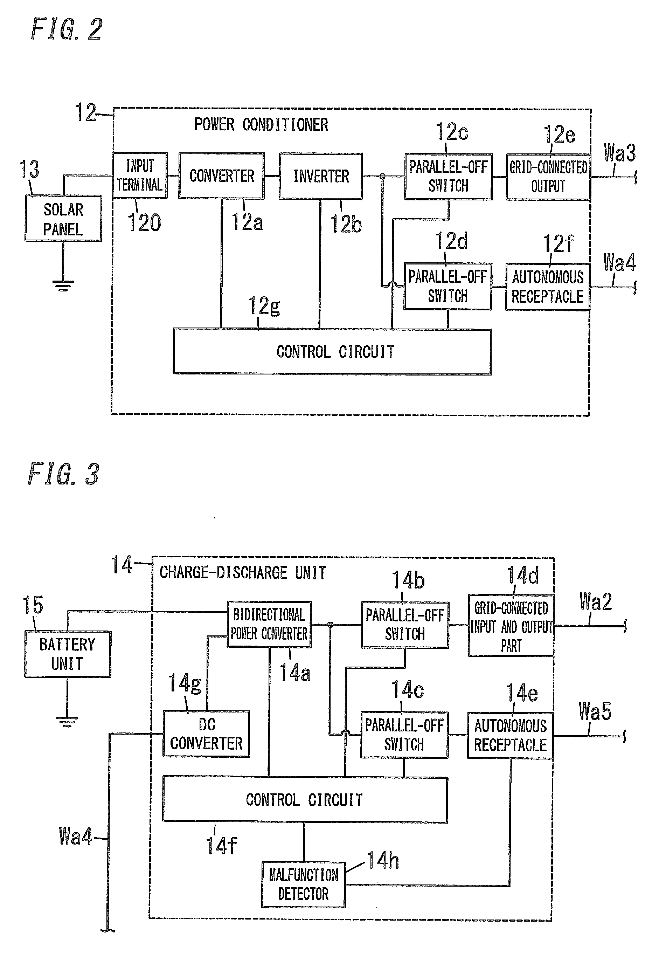

FIG. 2 shows a block diagram of the power conditioner 12 which includes a converter 12a, an inverter 12b, parallel-off switches 12c, 12d, a grid-connected output 12e, an autonomous receptacle 12f and a control circuit 12g.

The converter 12a is configured to convert, into a prescribed DC voltage, a DC output supplied from the solar panel 13 to an input terminal 120 of the power conditioner 12 to supply the DC voltage to the inverter 12b. The inverter 12b is configured to convert the DC voltage from the converter 12a into an AC voltage. The control circuit 12g is configured to control operations of the converter 12a and the inverter 12b and also to control the turning on and off of the parallel-off switches 12c, 12d so as to supply AC output from the inverter 12b to the distribution board 11 or the charge-discharge unit 14 through the grid-connected output 12e or the autonomous receptacle 12f, respectively.

An AC output from the grid-connected output 12e is supplied to the photovoltaic circuit breaker 11c in the distribution board 11 through an AC electric line Wa3, and further applied to a primary side of the main circuit breaker 11a through the breaker 11c. Therefore, the AC output from the grid-connected output 12e is supplied to the branch electric lines Wa2 through the photovoltaic circuit breaker 11c, the main circuit breaker 11a and the branch circuit breakers 11b. Surplus electricity of the AC power from the grid-connected output 12e is sold by a reverse flow to the commercial power supply PS through the main electric line Wa1. In addition, the power conditioner 12 has a function for grid-connected operation, for harmonizing the AC output from the grid-connected output 12e with the commercial power supplied from the commercial power supply PS.

An AC output from the autonomous receptacle 12f is supplied to the charge-discharge unit 14 through an AC electric line Wa4.

The present system further includes a battery device formed of the charge-discharge unit 14 and the battery unit 15. The battery unit 15 is formed of secondary batteries such as lithium-ion batteries for example and charge-discharge control is performed by the charge-discharge unit 14.

The charge-discharge unit 14 is connected to a branch circuit breaker 11b in the distribution board 11 through a branch electric line Wa2, and configured to convert AC power supplied through the distribution board 11 into AC power to charge the battery unit 15. Hereinafter, the branch electric line between the distribution board 11 (specifically, the branch circuit breaker 11b in the distribution board 11) and the charge-discharge unit 14 is referred to as a "first branch electric line". The charge-discharge unit 14 is also configured to convert DC power stored in the battery unit 15 into AC power to supply the AC power to appliances K2 described later through an AC electric line Wa5. In short, the charge-discharge unit 14 has two functions as an AC/DC converter and a DC/AC converter.

FIG. 3 shows a block diagram of the charge-discharge unit 14 which includes a bidirectional power converter 14a, parallel-off switches 14b, 14c, a grid-connected input and output part 14d, an autonomous receptacle 14e, a control circuit 14f, a DC converter 14g and a malfunction detector 14h. The power supply system of the present invention may include the malfunction detector (14h) separated from the charge-discharge unit (14).

The battery unit 15 is connected to the bidirectional power converter 14a. The bidirectional power converter 14a is configured to convert the DC power from the battery unit 15 into AC power to supply the AC power to the parallel-off switches 14b, 14c. The bidirectional power converter 14a is also configured to convert AC power, supplied through the grid-connected input and output part 14d and the parallel-off switch 14b from the first branch electric line Wa2, into DC power to charge the battery unit 15 by the DC power. The control circuit 14f is configured to control an operation of the bidirectional power converter 14a, and also to perform the turning on and off of the parallel-off switches 14b, 14c. For example, the control circuit 14f is configured to perform the turning on and off of the parallel-off switches 14b, 14c so as to supply AC output of the bidirectional power converter 14a to the distribution board 11 or the switch box 18 through the grid-connected input and output part 14d or the autonomous receptacle 14e, respectively. The control circuit 14f is also configured to perform a close control of the parallel-off switch 14b to supply the bidirectional power converter 14a with the AC output from the grid-connected input and output part 14d. In addition, the charge-discharge unit 14 has a function for grid-connected operation, for harmonizing the AC output from the grid-connected input and output part 14d with the commercial power supplied from the commercial power supply PS.

The power measuring unit 16 is configured to measure power at each of three places in the present system. Power measured at first place is AC power supplied through the main circuit breaker 11a from the commercial power supply PS and the power conditioner 12. Power measured at second place is AC power supplied from the grid-connected output 12e of the power conditioner 12. Power measured at third place is power for charging the battery unit 15, supplied to the charge-discharge unit 14 from the first branch electric line Wa2. The power measuring unit 16 is configured to transmit power data measured at each of the three places to the monitor terminal 17 by a wireless signal. The monitor terminal 17 is configured to display a power measurement result at each of the three places.

The power measuring unit 16 is configured to determine a power supply or power failure state based on power data measured at each of the three places to transmit a determination result (outage determining information) to the charge-discharge unit 14 through a signal line Ws. The power supply state is a state while the commercial power supply PS is supplying commercial power to the main electric circuit. The power failure state is a state while the supply of electricity from the commercial power supply PS is been interrupted. The charge-discharge unit 14 can recognize a power supply or power failure state based on the outage determining information. The charge-discharge unit 14 is also configured to transmit the outage determining information to the power conditioner 12 through the signal line Ws. The power conditioner 12 is configured to switch between a grid-connected operation and an autonomous operation based on the outage determining information. The grid-connected operation is an operation in which a dispersed power source (13) is connected (in parallel) with the commercial power supply PS. The autonomous operation is an operation in which the dispersed power source (13) is disconnected from the commercial power supply PS. That is, the power conditioner 12 is configured to respectively close and open the parallel-off switches 12c and 12d in the power supply state, and also to respectively open and close the parallel-off switches 12c and 12d in the power failure state.

The operations in the power supply state while the commercial power supply PS is supplying commercial power are now explained.

The power conditioner 12 supplies the main electric circuit (Wa1, Wa2) connected to the commercial power supply PS with AC power obtained from the dispersed power source (13) during the grid-connected operation. In the present embodiment, the power conditioner 12 closes the parallel-off switch 12c and also opens the parallel-off switch 12d in the power supply state, thereby supplying AC power, obtained (through the inverter 12b and the like) from power generated by the solar panel 13, to each branch electric line Wa2 through the photovoltaic circuit breaker 11c, the main circuit breaker 11a and each branch circuit breaker 11b from the grid-connected output 12e. That is, the power conditioner 12 supplies AC power obtained from the solar panel 13 through the distribution board 11 in the power supply state (the grid-connected operation). In this case, the AC power obtained from the solar panel 13 is not supplied to the autonomous receptacle 12f provided in the power conditioner 12. The grid-connected output 12e is a dedicated output for the grid-connected operation and corresponds to the first output part of the present invention. The autonomous receptacle 12f is a dedicated output for the autonomous operation and corresponds to the second output part of the present invention.

The charge-discharge unit 14 charges the battery unit by power from the commercial power supply PS during the grid-connected operation. In the present embodiment, the charge-discharge unit 14 closes the parallel-off switch 14b and also opens the parallel-off switch 14c in the power supply state, thereby charging the battery unit by DC power obtained from AC power of the commercial power supply PS. That is, the bidirectional power converter 14a converts AC power supplied from the first branch electric line Wa2 into DC power to charge the battery unit 15.

Therefore, in the power supply state, power for operating the appliances K1 and power for charging the battery unit 15 are supplied via the distribution board 11 from the commercial power supply PS and the power conditioner 12. Surplus electricity of the AC power from the power conditioner 12 other than the power for operating the appliances K1 and the power for charging the battery unit 15 is sold by the reverse flow of the electricity into the commercial power supply PS via the main electric line Wa1. Thus, the power conditioner 12 performs the grid-connected operation in the power supply state.

A specified branch electric line (hereinafter referred to as a "second branch electric line") Wa2 is connected between the distribution board 11 (specifically a branch circuit breaker 11b in the distribution board 11) and the switch box 18, and connected to an AC electric line Wa6 via the switch box 18. The switch box 18 includes a switch means (e.g., a relay) for connecting the AC electric line Wa6 to the second branch electric line Wa2, or the AC electric line Wa5 between the switch box 18 and charge-discharge unit 14, and connects the AC electric line Wa6 to the second branch electric line Wa2 in the power supply state. In the example of FIG. 1, the switch box 18 includes a main input terminal 181, an extra input terminal 182 and an output terminal 183. One branch electric line (the second branch electric line) Wa2 is connected to the main input terminal 181. The AC electric line Wa5 is connected to the extra input terminal 182. The AC electric line Wa6 is connected to the output terminal 183. Therefore, in the power supply state, the power for operating the appliances K2 connected to the AC electric line Wa6 is supplied from the commercial power supply PS and the power conditioner 12.

In short, in the present embodiment, the power conditioner 12 includes the input terminal 120, a first output terminal (12e), a switch device (12c) placed therebetween, and the control circuit (12g), which constitute the first output part. That is, the control circuit (12g) as the first output part is configured, during the grid-connected operation, to close the switch device (12c) (specifically close and open the switch devices (12c and 12d), respectively) to supply the main electric circuit with AC power obtained from the dispersed power source (13). The main electric circuit of the embodiment includes the distribution board 11 including the main circuit breaker 11a and the branch circuit breakers 11b, the main electric line Wa1 connected to the main circuit breaker 11a in the distribution board 11 from the commercial power supply PS (the electric power company), and the branch electric lines Wa2 respectively connected to the branch circuit breakers 11b. Also in the embodiment, the input terminal 120, a second output terminal (12f), a switch device (12d) placed therebetween, and the control circuit (12g) constitute the second output part. That is, the control circuit (12g) as the second output part is configured, during the autonomous operation, to close the switch device (12d) (specifically open and close the switch devices (12c and 12d), respectively) to supply an extra electric circuit with power obtained from the dispersed power source (13). In the embodiment, the extra electric circuit includes, the charge-discharge unit 14, the battery unit 15, the switch box 18, a first extra electric line (Wa4) connected between the power conditioner 12 and the charge-discharge unit 14, a second extra electric line (Wa5) connected between an output terminal (14e) of the charge-discharge unit 14 and the switch box 18, and a shared electric line (Wa6) connected to the second extra electric line (Wa5) via the switch box 18. That is, the shared electric line (Wa6) is connected to the branch electric line Wa2 via the switch box 18 to function as a branch electric line during the grid-connected operation, and also connected to the second extra electric line (Wa5) via the switch box 18 to function as an extra electric line during the autonomous operation.

In an example, the switch box 18 is included in the charge-discharge unit 14 as a switch device. A main input terminal 181 of the switch device 18 is connected to one branch electric line (the second branch electric line) Wa2. An extra input terminal 182 of the switch device 18 is connected to an output of the parallel-off switch 14c. An output terminal 183 of the switch device 18 is connected to the shared electric line (Wa6). A control circuit 14f in this example is configured to electrically connect the output terminal 183 to the main input terminal 181 during the grid-connected operation, and also electrically connect the output terminal 183 to the extra input terminal 182 (namely the output of the parallel-off switch 14c) during the autonomous operation.

An operation in a power failure state when the commercial power supply PS is not supplying commercial power is explained.

The power conditioner 12 outputs power obtained from the dispersed power source (13) during the autonomous operation. In the embodiment, the power conditioner 12 opens the parallel-off switch 12c in the power failure state. In this case, AC power obtained from power generated by the solar panel 13 is not supplied to a side of the distribution board 11. That is, power for operating the appliances K1 is not supplied, and also power for charging the battery unit 15 is not supplied via the distribution board 11 from the commercial power supply PS and the power conditioner 12.

In the power failure state, the power conditioner 12 however closes the parallel-off switch 12d to supply the autonomous receptacle 12f with AC power obtained from the power generated by the solar panel 13. That is, the power conditioner 12 performs the autonomous operation in the power failure state. The conditioner may be configured to be automatically switched to the autonomous operation in a power failure state, or configured to be switched to the autonomous operation by a user's manual operation in a power failure state.

The control circuit 14f of the charge-discharge unit 14 obtains its own operating power supply from the power stored in the battery unit 15, and can accordingly operate even in the power failure state. The control circuit 14f then opens the parallel-off switch 14b and closes the parallel-off switch 14c in the power failure state. The bidirectional power converter 14a converts DC power stored in the battery unit 15 into AC power to supply the AC power to the autonomous receptacle 14e via the parallel-off switch 14c. The autonomous receptacle 14e corresponds to the discharge output part of the present invention.

The autonomous receptacle 14e is connected to the switch box 18 via the AC electric line Wa5. The switch box 18 connects the AC electric line Wa6 to the AC electric line Wa5 in the power failure state. In the power failure state, power for operating the appliances K2 connected to the AC electric line Wa6 is supplied from the battery unit 15 via the charge-discharge unit 14, where the appliances K2 are appliances to be operated in the power failure state, such as lighting equipment, air conditioners, a refrigerator and the like for example. As a configuration for switch operation, the switch box 18 may include an automatic switch means (not shown) for performing automatic switching or a manual operation means (not shown) for a user's manual switching in a power failure state. The automatic switch means can be formed of, for example, a relay or the like.

Thus, the charge-discharge unit 14 includes the autonomous receptacle 14e for supplying AC power to the appliances K2 to be operated even in a power failure state, and can accordingly supply power for operating the appliances K2 in the power failure state without depending on the distribution board 11. Examples of the autonomous receptacle 14e include a receptacle for receiving male contacts of a plug and a terminal block for connecting with terminals.

The power conditioner 12 further supplies AC power to the charge-discharge unit 14 via the autonomous receptacle 12f, where the AC power is obtained from the power generated by the solar panel 13. The DC converter 14g of the charge-discharge unit 14 converts the AC power from the autonomous receptacle 12f into DC power. The DC power from the DC converter 14g is converted into power for charging the battery unit 15, or AC power through the bidirectional power converter 14a to be supplied to the appliances K2 via the autonomous receptacle 14e.

This power supply system supplies power for charging the battery unit 15 through the distribution board 11 from the commercial power supply PS and the power conditioner 12 in the power supply state. However, the AC output of the power conditioner 12 is not supplied to the distribution board 11 in the power failure state of the commercial power supply PS. Power for charging the battery unit 15 is therefore supplied from the autonomous receptacle 12f of the power conditioner 12 in the power failure state of the commercial power supply PS as stated above. It is accordingly possible to charge the battery unit 15 by photovoltaic power generation even in the power failure state. Power can be therefore stored from the autonomous receptacle 12f of the power conditioner 12, thereby improving power supply capacity in the power failure state.

In addition, power to be supplied to the appliances K2 via the switch box 18 is supplied through the distribution board 11 in the power supply state and also supplied from the autonomous receptacle 14e of the charge-discharge unit 14 in the power failure state. It is therefore possible to always supply power for operating the appliances K2.

Thus, the charge-discharge unit 14 supplies AC power to the appliances K2 from the autonomous receptacle 14e by power stored in the battery unit 15 and power generated by the solar panel 13 in the power failure state.

The embodiment detects a malfunction such as short circuit, electric leakage or the like in an output electric circuit formed of the AC electric lines Wa5 and Wa6, the switch box 18 and the appliances K2 when the power supply state changes to the power failure state (the power conditioner 12 switches from the grid-connected operation to the autonomous operation). That is, the power supply system (the charge-discharge unit 14 in the embodiment) includes the malfunction detector 14h configured to detect a malfunction in an electric circuit from a discharge output part (14e) to the appliances K2 (a side of the discharge output part of the charge-discharge unit 14 in the extra electric lines in the embodiment). Hereinafter, this malfunction detection process is explained.

The control circuit 14f of the charge-discharge unit 14 controls the bidirectional power converter 14a after switched to the power failure state, and then limits AC power supplied from the autonomous receptacle 14e to a level approximately equal to standby power of the appliances K2. That is, the appliances K2 is supplied, from the charge-discharge unit 14, with power (limited power) for operating in a standby mode in which power consumption is suppressed. The level approximately equal to standby power of the appliances K2 is, for example, power slightly larger than the standby power of the appliances K2 and smaller than rated power of the appliances K2 in a normal operation mode. The actual limited power is obtained by adding, to power slightly larger than standby power of the appliances K2, power consumption of terminals (the power measuring unit 16, the monitor terminal 17, the system remote controller 20 and the like) to be supplied with power from the AC electric line Wa6 to operate.

The power measuring unit 16 measures power supplied to the appliances K2 from the AC electric line Wa6. Based on this measured result, the system remote controller 20 previously calculates standby power of the appliances K2. The control circuit 14f obtains data on the standby power held by the system remote controller 20 therefrom, and sets the limited power based on the data on the standby power of the appliances K2.

The charge-discharge unit 14 has a function of wire communication or wireless communication. The malfunction detector 14h notifies the system remote controller 20 (equipment controller) of a start of malfunction detection such as short circuit, electric leakage or the like by the wire communication or the wireless communication (start notice of malfunction detection). For example, the charge-discharge unit 14 is configured to communicate with the system remote controller 20 through a function of wireless communication in the power measuring unit 16 which is transmissibly connected with the charge-discharge unit via the signal line Ws.

The system remote controller 20 is supplied with operating power from the AC electric line Wa6 and has a function for remote control of the appliances K1 and K2. If receiving the start notice of malfunction detection, the system remote controller 20 allows the appliances K2 to shift to the standby mode by the wire communication or the wireless communication.

Therefore, when the power supply state changes to the power failure state, the appliances K2 is controlled to be in the standby mode and the limited power is supplied from the autonomous receptacle 14e. The malfunction detector 14h monitors an output voltage of the autonomous receptacle 14e with the limited power supplied to the appliances K2 in the standby mode.

If the output voltage of the autonomous receptacle 14e is equal to or more than a threshold (for example, 90% or more of an output voltage (e.g., AC 100V) of the branch circuit breaker 11b) the malfunction detector 14h determines that an output electric circuit of the autonomous receptacle 14e is normal. When the output electric circuit of the autonomous receptacle 14e is normal, the control circuit 14f controls the bidirectional power converter 14a to release output limitation, thereby increasing AC power supplied from the autonomous receptacle 14e to supply the appliances K2 with power for activating the appliances from the standby mode.

If a malfunction such as short circuit, electric leakage or the like is present in the output electric circuit of the autonomous receptacle 14e, the output voltage of the autonomous receptacle 14e is reduced. Therefore, if the output voltage of the autonomous receptacle 14e is less than the threshold (e.g., less than 90% ofAC 100V), the malfunction detector 14h determines that a malfunction is present in the output electric circuit of the autonomous receptacle 14e. When a malfunction is present in the output electric circuit of the autonomous receptacle 14e, the control circuit 14f stops the AC output operation of the bidirectional power converter 14a and opens the parallel-off switch 14c to shut off (halt) power supply from the autonomous receptacle 14e.

Thus, it is determined whether or not a malfunction is present in the electric circuit by the comparatively small limited power when power is supplied to the appliances K2 from the autonomous receptacle 14e. When the malfunction is present, the power supply from the autonomous receptacle 14e is stopped. It is therefore possible to effectively perform the detection of malfunction such as short circuit, electric leakage or the like through the charge-discharge unit 14 and to suppress an overload of the grid-connected system (e.g., the grid-connected photovoltaic system) caused by electricity supply from the dispersed power source or the battery during autonomous operation of the power conditioner 12.

In the embodiment, the solar panel 13 is applied as the dispersed power source, but other dispersed power source such as a fuel cell, a wind power generator or the like may be applied.

In an embodiment, the power supply system includes more than one set of the charge-discharge unit 14 and the battery unit 15. The charge-discharge units 14 are connected to mutually different AC electric lines Wa6, respectively. Each of the charge-discharge units 14 is configured to independently detect a malfunction in an output electric circuit of its own autonomous receptacle 14e in a power failure state. Only charge-discharge units 14 in each of which no malfunction is present in an output electric circuit of its own autonomous receptacle 14e continue supplying power from the autonomous receptacle 14e.

In addition, if detecting a malfunction in the output electric circuit of the autonomous receptacle 14e, the malfunction detector 14e transmits notice of electric circuit malfunction to the monitor terminal 17 by the wire communication or the wireless communication. For example, the charge-discharge unit 14 is configured to communicate with the monitor terminal 17 through the function of wireless communication in the power measuring unit 16 which is transmissibly connected with the charge-discharge unit via the signal line Ws. If receiving the notice of electric circuit malfunction, the monitor terminal 17 displays the occurrence of malfunction such as short circuit, electric leakage or the like in the output electric circuit of the autonomous receptacle 14e to inform a user thereof. The monitor terminal 17 corresponds to the malfunction alarm of the present invention.

Therefore, the user can recognize the malfunction in the electric circuit by viewing a display screen of the monitor terminal 17 and take a countermeasure for recovery. The malfunction alarm of the present invention may be configured to inform a user(s) of the occurrence of malfunction by a series of alarm sounds.

In an embodiment, the power conditioner 12 is configured to convert power from the dispersed power source (13) into AC power and DC power to output the AC power and the DC power through the first output part (12e) and the second output part (12f), respectively. In the example of FIG. 2, the input terminal 120 of the power conditioner 12 or the output of the converter 12a (or another converter in parallel with the converter 12a) is connected to the autonomous receptacle 12f via the parallel-off switch 12d. In the example of FIG. 3, the DC output from the autonomous receptacle 12f is supplied to the bidirectional power converter 14a via the AC electric line Wa4. In this case, the DC converter 14g can be omitted.

Although the present invention has been described with reference to certain preferred embodiments, numerous modifications and variations can be made by those skilled in the art without departing from the true spirit and scope of this invention, namely claims.

## Claims

1. A power supply system, comprising:
a power conditioner comprising a first output part configured to supply a main electric circuit connected with a commercial power supply with AC power obtained from a dispersed power source during a grid-connected operation when the dispersed power source is connected to the commercial power supply, and a second output part configured to output power obtained from the dispersed power source during an autonomous operation when the dispersed power source is disconnected from the commercial power supply; and
a charge-discharge unit configured to charge a battery unit by power from the commercial power supply and the second output part, and also to convert power stored in the battery unit into AC power to supply the AC power to at least one appliance through a discharge output part,
wherein the power supply system further comprises a malfunction detector configured to detect a malfunction in an electric circuit from the discharge output part to the appliance, and
the charge-discharge unit is configured to stop supplying said AC power from the discharge output part if the malfunction detector detects the malfunction.

2. The power supply system of claim 1, wherein
the charge-discharge unit is configured to supply the appliance with power smaller than rated power of the appliance through the discharge output part if the power conditioner switches the grid-connected operation to the autonomous operation,
the malfunction detector is configured to detect said malfunction if an output voltage of the discharge output part is less than a threshold, and
the charge-discharge unit is configured to stop supplying said AC power from the discharge output part if the malfunction detector detects the malfunction, and also to increase the power supplied through the discharge output part if the malfunction detector does not detect the malfunction.

3. The power supply system of claim 1 or 2, comprising a malfunction alarm configured to notify occurrence of the malfunction if the malfunction detector detects the malfunction.
